(19) Europäisches Patentamt

European Patent Office

Office européen des brevets

(11) EP 1 711 017 A2

(12) **EUROPEAN PATENT APPLICATION**

(43) Date of publication:
11.10.2006 Bulletin 2006/41

(51) Int Cl.:
*H04N 7/26* (2006.01)

(21) Application number: 06251966.5

(22) Date of filing: 07.04.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 07.04.2005 GB 0507106

(71) Applicant: British Broadcasting Corporation
London W1A 1AA (GB)

(72) Inventor: Richard, Thomas Russell
Orsett
Essex RM16 3DF (GB)

(74) Representative: Kazi, Ilya et al
Mathys & Squire
120 Holborn
London EC1N 2SQ (GB)

(54) **Compression encoding**

(57) A method and system for encoding data in which fine control of quantisation is provided by quantising each of a set of values by either a finer or a coarser quantiser, the proportion of the values being used by each quantiser determining the degree of quantisation. Each set of values has an associated quantisation parameter which determines the two quantisers and specifies the proportion of values to be quantised by each quantiser. The actual values to be quantised are used in determining how the values are divided among the two quantisers in the desired proportion.

Figure 2

EP 1 711 017 A2

**Description**

This invention relates to the compression encoding of data. It is particularly applicable to data carrying a video signal and will be discussed in this context but, as will be apparent, may be used to compress other data.

Data compression systems can be divided into two categories, lossless, where the input signal can be recreated perfectly from the coded signal, and lossy where perfect recreation is not possible, the system normally being arranged so that the information lost is not important. The invention is particularly applicable to lossy compression systems, but the principles may be used more widely.

It is a common requirement of compression systems that data is discarded so that the compressed signal fits within an available bandwidth (bit rate). Examples of video compression systems using this principle include MPEG-2, H264.

Compression is usually achieved, at least in part, by quantising data values to a smaller number of bits. For example if there is insufficient data capacity to encode the signal as 8-bit values, the values can be divided by two in the encoder and multiplied by two in the decoder, thus resulting in an overall reduction in bit-rate from 8-bits to 7-bits per data value. The reduction in the number of bits per data value results in the addition of quantising noise to the signal. For example when dividing-by-two (with rounding rather than truncation) then multiplying by two, quantising noise with a peak value of 0.5 LSBs is added.

Typically the degree of quantising is increased until the total number of bits is sufficiently small. In practice, continuing to divide by powers of 2 may often be too coarse, for example if dividing by 2 results in only slightly too many bits, dividing every value by 4 may result in an unnecessarily large amount of added quantising noise. Therefore it is common to provide intermediate quantising steps by dividing by values that are not powers of two, for example one might divide by 3 in the encoder and multiply by 3 in the decoder. However the effectiveness of quantising depends on the characteristics of the Variable Length Code adopted. For any given code, it is not necessarily guaranteed that dividing a value by (say) 3 rather than by 2 will always result in a smaller number of bits; it may do for certain data values but not for others. Therefore there may be circumstances with conventional coding systems where additional quantising noise is added for no direct benefit to the bit rate.

According to a first aspect, the invention provides a method of compression encoding a set of data values comprising quantising the data values by applying a respective quantiser value to each data value to produce quantised data values; coding the quantised data values according to a coding scheme to produce coded data values, wherein the number of bits allocated to each coded data value is variable; characterised by defining a relatively coarse quantiser and a relatively fine quantiser; defining blocks of data; setting a quantisation parameter for each block of data; selecting, based on at least one selection criterion dependent on the quantisation parameter for each block, a first portion of the block of data to be quantised using the relatively fine quantiser and a second portion of the block of data to be quantised using the relatively coarse quantiser.

Thus the invention uses a different strategy for fine control of quantisation such that, with an appropriate choice of Variable Length Code, every addition of quantising noise is 'useful', in that it is accompanied by a reduction in the total number of bits.

Preferably the relatively coarse quantiser and relatively fine quantiser is selected for each block from among predefined pairs of available coarse and fine quantiser values based on the quantisation parameter. Preferably the quantisation parameter comprises a first component for selecting a pair of said relatively coarse and fine quantiser values and a second component for selecting portions of the data to be coded. Preferably also the quantisation parameter encodes pairs of relatively coarse and fine quantiser values such that the relatively coarse quantiser value for a first value of the first component of the quantisation parameter corresponds to the relatively fine quantiser value for the next available higher value of the first component. Preferably selection is based on the second component of the quantisation parameter such that an increment of the second component results in a higher proportion of the data being quantised using the relatively coarse quantiser. In a preferred arrangement the first component is encoded in more significant bits of the quantisation parameter and the second component is encoded in less significant bits of the quantisation parameter. Advantageously encoding of the first and second components is such that every increment of the quantisation parameter increases the degree of quantisation. In a preferred implementation, two least significant bits encode progressively increasing proportions to quantise using the relatively coarse quantiser and at least two adjacent more significant bits encode increasing values of relatively coarse and fine quantiser values. Also advantageously for a quantiser parameter second component corresponding to minimum quantisation, all data values are quantised using the relatively fine quantiser. All of the above features contribute, independently and advantageously in synergistic combination to providing convenient progressive adjustment of depth of quantisation based on a single quantisation parameter.

Preferably selecting is additionally based on the value of each data value. Advantageously data values above a threshold are quantised using said relatively fine quantiser and data values below the threshold are quantised using said relatively coarse quantiser and preferably said threshold is varied as a function of the quantisation parameter for each block. Alternatively or equivalently available data values are mapped to coarse or fine quantisation categories based on a mapping which varies as a function of quantisation parameter.

Particularly conveniently the relatively coarse and relatively fine quantiser values differ by a factor of two. The ratios of the relatively coarse and relatively fine quantisers are preferably selected based on the coding scheme so that quantising and coding a given non-zero data value using the relatively coarse quantiser produces a coded data value having fewer bits than quantising and coding the given data value using the relatively fine quantiser.

Selecting may additionally be based on spatial information.

In a preferred implementation for each data block selection is based on exactly two possible quantisers, preferably differing by a factor of two.

However, the invention is not limited to variation of proportions between only two quantisers for a given block and a further quantiser may be defined and selecting may include optionally selecting the further quantiser for a further portion of the data. The further quantiser may be intermediate or may be relatively more coarse or relatively more fine.

In a preferred application the data corresponds to video information to be coded. Audio or other media or general data may also be encoded. Preferably video information is transformed prior to quantising. Preferably sequential blocks of data are coded, preferably in real time.

According to a second, related aspect, the invention provides a method comprising setting an initial quantisation parameter value for a group of data comprising at least one block coding at least a block of data according to any preceding claim determining whether the coded data satisfies at least one test conditionally on the outcome of the test, adjusting the quantisation parameter and repeating said coding and determining.

Preferably the initial quantisation parameter value is a minimum, the test comprises determining a bit requirement, and adjusting comprises incrementing. Alternatively the initial quantisation parameter value can be a maximum, and the test comprises determining a quality measure, and adjusting comprises decrementing.

Advantageously the coding scheme is an exp Golomb coding scheme.

Preferably applying a quantiser value comprises dividing a data value by the quantiser value to produce a dividend, preferably rounding or truncating the dividend.

According to a third aspect the invention provides an encoder for compression encoding a set of data values comprising means for quantising the data values by applying a respective quantiser value to each data value to produce quantised data values;and means for coding the quantised data values according to a coding scheme to produce coded data values, wherein the number of bits allocated to each coded data value is variable; characterised by means for defining a relatively coarse quantiser and a relatively fine quantiser; means for defining blocks of data; means for setting a quantisation parameter for each block of data; and means for selecting, based on at least one selection criterion dependent on the quantisation parameter for each block, a first portion of the block of data to be quantised using the relatively fine quantiser and a second portion of the block of data to be quantised using the relatively coarse quantiser.

According to a fourth aspect the invention provides an encoder for compression encoding a set of data values comprising a quantiser for quantising the data values by applying a respective quantiser value to each data value to produce quantised data values; and a variable length coder for coding the quantised data values according to a coding scheme to produce coded data values, wherein the number of bits allocated to each coded data value is variable; characterised by a quantiser register for storing at least one of a relatively coarse quantiser and a relatively fine quantiser; block definition apparatus for defining blocks of data; a quantisation parameter store for storing a quantisation parameter for each block of data; and a data partitioning processor for selecting, based on at least one selection criterion dependent on the quantisation parameter for each block, a first portion of the block of data to be quantised using the relatively fine quantiser and a second portion of the block of data to be quantised using the relatively coarse quantiser.

A fifth aspect of the invention provides a method of compression decoding a set of compressed data values comprising decoding the compressed data to produce quantised data values; and inverse quantising the quantised data values by applying a respective quantiser value to each data value to produce decompressed data values; characterised by defining a relatively coarse quantiser and a relatively fine quantiser; defining blocks of quantized data; and extracting a quantisation parameter from each block of data; selecting, based on at least one selection criterion dependent on the quantisation parameter for each block, a first portion of the block of data to be inverse quantised using the relatively fine quantiser and a second portion of the block of data to be inverse quantised using the relatively coarse quantiser.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

Any feature in one aspect of the invention may be applied to other aspects of the invention, in any appropriate combination. In particular, method aspects may be applied to apparatus aspects, and vice versa.

An embodiment will now be described, by way of example only, with reference to the accompanying drawings in which:-

Figure 1 illustrates a coding and decoding process including quantisation;

Figure 2 shows a quantisation process in accordance with an embodiment of the present invention.

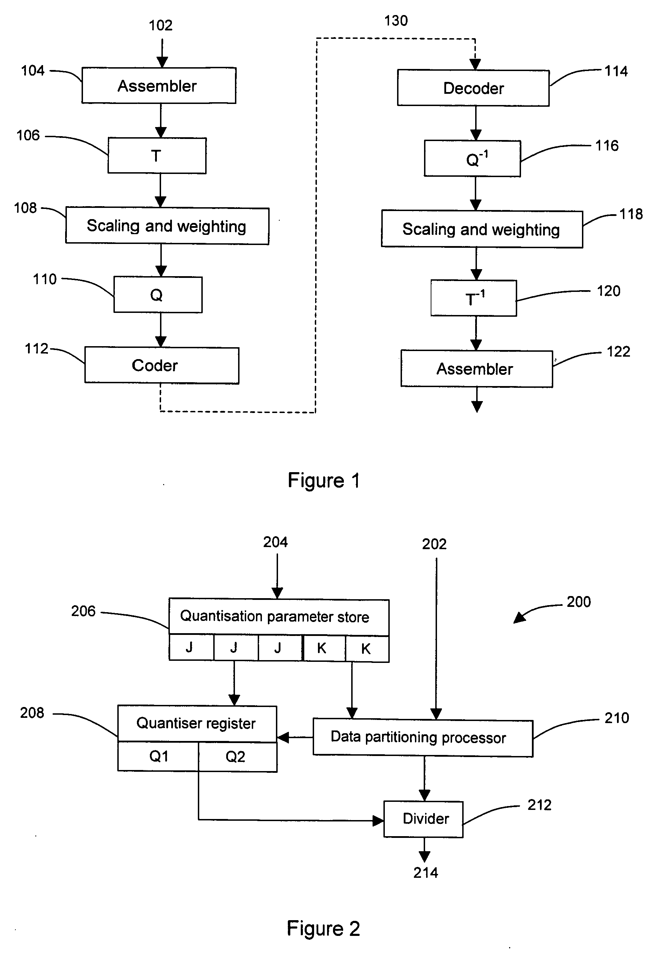

Referring to Figure 1, input data samples 102 are assembled into blocks at assembler 104, and undergo a domain transform at step 106. The transformed coefficients undergo scaling and weighting at stage 108, and are subsequently quantised by quantiser 110. The last stage of encoding is to encode the quantised coefficients, for example using variable length coding.

The coded data stream 130 is decoded using essentially the same steps in reverse. The coded data stream is decoded at 114 to produce quantised coefficient values. These are then inverse quantised at 116 and scaled and weighted at 118, using substantially the inverse factors as those used at stage 108. The coefficients then undergo an inverse transform at 120, before being assembled from blocks back into a data stream at 122.

Referring to Figure 2, a quantiser 200 receives a block of coefficient values 202 (which may be transformed, scaled and weighted) and a quantisation parameter 204. In Figure 2, the quantiser parameter comprises five bits. A quantisation parameter store 206, stores the first three bits of the quantisation parameter (denoted J in Fig 2) for communication to quantiser register 208. The remaining two bits of the quantisation parameter (denoted K in Figure 2) are stored for communication to data partitioning processor 210.

Based on the values J, the quantiser register stores a first relatively coarse quantiser Q1 and a second relatively fine quantiser Q2.

The data partitioning processor 110 receives the coefficient values 102 and, based on the individual coefficient values themselves, and on the values K (as explained in more detail below), determines which of quantiser Q1 or Q2 should be used for each coefficient value.

The coefficient values are then passed to a divider 212, and divided by the selected quantiser Q1 or Q2. The quantised data is output at 214.

For ease of understanding, the invention will be described in the context of a complete video coding process, which incorporates a further feature for compatibility with existing standards as described in our co-pending application bearing attorney reference IK/P27498 filed concurrently herewith and incorporated by reference for all purposes, particularly the disclosure of a method and apparatus for packing a compressed signal in a legacy format. However, as will be apparent, although the present invention clearly offers particular advantages in this context, the coding principles are much more generally applicable to other forms of data and indeed in principle to any data which is to be quantised and variable-length coded.

A compression method is described which readily achieves a reduction in total bit-rate, compared with uncompressed 10-bit 4:2:2 component video, of 2:1. One application is to encode a 1080p50 (progressive) HDTV signal into a form that is suitable for transmission and storage using an uncompressed 1080i50 (interlaced) medium such as HDSDI or D6. In that application a further novel feature is that the compressed signal is recognisable when displayed as 1080i50, for ease of monitoring and identification as described in our co-pending application bearing attorney reference IK/P27498 filed concurrently herewith. When that feature is not required a compression of 2.5:1 is readily achievable.

**Compression process**

**Block structure**

Each frame is divided into macroblocks of 16 (luminance) pixels x 4 TV lines. Each macroblock contains 64 luminance pixels, 32 Cb chrominance pixels and 32 Cr chrominance pixels. For a 1080p frame this results in 120 x 270 = 32400 macroblocks in total. The height of the macroblock determines the minimum delay through the coder or decoder (i.e. four lines).

For the purposes of the invention data is grouped into blocks and it is convenient that this is done with some reference to picture block in the case of video content, although arbitrary groupings are also possible.

**Integer transforms**

Each macroblock is subdivided into 4-pixel x 4-line transform blocks, so in each macroblock there are 4 luminance transform blocks, 2 Cb transform blocks and 2 Cr transform blocks. Each 4x4 block is transformed into frequency space using the following Integer transform $R = TXT^T$ (*Ref. 1*):

$$\begin{bmatrix} r_{00} & r_{01} & r_{02} & r_{03} \\ r_{10} & r_{11} & r_{12} & r_{13} \\ r_{20} & r_{21} & r_{22} & r_{23} \\ r_{30} & r_{31} & r_{32} & r_{33} \end{bmatrix} = \begin{bmatrix} 1 & 1 & 1 & 1 \\ 2 & 1 & -1 & -2 \\ 1 & -1 & -1 & 1 \\ 1 & -2 & 2 & -1 \end{bmatrix} \begin{bmatrix} x_{00} & x_{01} & x_{02} & x_{03} \\ x_{10} & x_{11} & x_{12} & x_{13} \\ x_{20} & x_{21} & x_{22} & x_{23} \\ x_{30} & x_{31} & x_{32} & x_{33} \end{bmatrix} \begin{bmatrix} 1 & 2 & 1 & 1 \\ 1 & 1 & -1 & -2 \\ 1 & -1 & -1 & 2 \\ 1 & -2 & 1 & -1 \end{bmatrix}$$

For the purposes of the computation the 10-bit input pixels (luminance and chrominance) are assumed to be signed values in the range -512 to +511 so 'zero' luminance is mid grey. The output values from the transform are in the range - 18414 to +18414.

Transformation is not essential for the invention, but greatly increases the effectiveness of the compression process as less perceptible, typically higher frequency, information can be more heavily quantised with less noticeable loss in quality than simple quantising of picture values.

**Scaling**

The 4x4 outputs from the Integer transforms are scaled and rounded according to the following algorithm:

$$s_{ij} = \text{Sign}(r_{ij}) * ((\text{Abs}(r_{ij} * w_{ij}) + 32768) >> 16)$$

where:

$$\begin{bmatrix} w_{00} & w_{01} & w_{02} & w_{03} \\ w_{10} & w_{11} & w_{12} & w_{13} \\ w_{20} & w_{21} & w_{22} & w_{23} \\ w_{30} & w_{31} & w_{32} & w_{33} \end{bmatrix} = \begin{bmatrix} 16384 & 10486 & 16384 & 10486 \\ 10486 & 6711 & 10486 & 6711 \\ 16384 & 10486 & 16384 & 10486 \\ 10486 & 6711 & 10486 & 6711 \end{bmatrix}$$

The output values are in the range -2048 to +2046.

Note that the multipliers are approximations to the following constants (**Ref. 1**):

$$16384 = 2^{22}/16/16$$

$$10486 \approx 2^{22}/20/20$$

$$6711 \approx 2^{22}/25/25$$

**Hadamard transforms**

The DC terms ($s_{00}$) of the scaled Integer transforms, that is four values per macroblock from the luminance and two values each per macroblock from Cb and Cr, are further processed using 1-dimensional Hadamard transforms as follows:

Luminance:

$$h_a = s_a + s_b + s_c + s_d$$

$$h_b = s_a + s_b - s_c - s_d$$

$$h_c = s_a - s_b + s_c - s_d$$

$$h_d = s_a - s_b - s_c + s_d$$

Chrominance:

$$h_a = s_a + s_b$$

$$h_b = s_a - s_b$$

These transforms exploit the probable correlation between the DC terms in adjacent transform blocks, and result in a single aggregated DC value per macroblock which is always sent as a 10-bit number in the compressed data.

**Quantisation**

To control the overall bit rate, thus ensuring that the compressed signal fits into the available data capacity, a variable degree of quantising is applied independently to each macroblock. The quantising is applied to all the non-zero transform coefficients in the macroblock, luminance and chrominance, except the three aggregated DC terms $h_a$ (Y, Cb and Cr).

Since the only purpose in this application is to control the bit rate, it is undesirable to apply any *ineffective* quantising, i.e. the addition of quantisation noise without any consequent reduction in the total number of coded bits. This is a shortcoming of the quantising schemes used by some other compression techniques.

To avoid this shortcoming the following constraints are imposed:

    1. Quantisation consists always of bit shifts, i.e. divisions by powers of two.

    2. The variable-length code chosen to encode the quantised coefficients has the property that dividing the coefficient value by two is guaranteed to result in a reduction in the number of coded bits.

The combination of these characteristics means that whenever an additional degree of quantisation is applied (i.e. a coefficient is divided by a greater power of two) the total number of bits is guaranteed to fall. It also helps achieve the property of adding very little or no loss on a second or subsequent generation. A further advantage is that the processing is efficient to implement in hardware or software.

One possible approach to such quantising given the constraints is to divide all (non-zero) coefficients in the macroblock by the same power of two, and signal that number to the decoder. However such a coarse control could result in a much greater degree of quantisation noise than necessary to meet the bit budget.

What is proposed herein is a novel method of quantising different coefficients to different degrees, without the overhead of signalling additional information to the decoder. The way this is achieved is as follows:

1. The degree of quantisation is controlled by a quantisation parameter, here a 5-bit unsigned number q, taking a value from 0 to 31.

2. A first component of this, in this case the most-significant 3 bits of q, being a value in the range 0 to 7, determine two possible powers of two by which each coefficient in a macroblock may be divided, as follows:

| 0 | divide by 1 or 2 |
|---|---|

(continued)

| | |
|---|---|
| 1 | divide by 2 or 4 |
| 2 | divide by 4 or 8 |
| 3 | divide by 8 or 16 |
| 4 | divide by 16 or 32 |
| 5 | divide by 32 or 64 |
| 6 | divide by 64 or 128 |
| 7 | divide by 128 or 256 |

3. A second component of this, in this case the least-significant 2 bits of q, in conjunction with the value of the coefficient itself, determine which of the two possible divisors is used. A three bit number in the range 4 to 7 is derived from the coefficient value as follows:

(a) Take the absolute value of the coefficient.
(b) If the value is greater than 7 keep dividing by two until 7 or less.
(c) If the value is less than 4 keep multiplying by two until 4 or more.

The following table determines whether the smaller or larger divisor is used, where the rows correspond to the least-significant 2 bits of q and the columns to the number derived from the coefficient:

| | 4 | 5 | 6 | 7 |
|---|---|---|---|---|
| 0 | smaller | smaller | smaller | smaller |
| 1 | larger | smaller | smaller | smaller |
| 2 | larger | larger | smaller | smaller |
| 3 | larger | larger | larger | smaller |

So if the least-significant 2 bits of q are zero the smaller of the two divisors is always used; if but otherwise which divisor is used depends on the value of the coefficient.

In this way fine control over the degree of quantisation is achieved, such that the equivalent quantisation factor doubles for every increment of 4 in q.

In practice this is refined based on two factors:

1. To minimise the added quantisation noise the coefficient values are rounded rather than simply truncated.

2. The decoder sees only the quantised value, which may not necessarily give rise to the same three-bit number (4-7) as that derived from the original coefficient.

As a result the actual algorithm used is slightly more complex and is listed in Appendix A.

The following process is used to determine the appropriate value of q to use for each macroblock:

(a) Initialise q to zero, corresponding to minimum quantising.

(b) Quantise all the (non-DC) coefficients in the macroblock according to the value of q, where the most-significant three bits of q determine two possible divisors and the least-significant two bits of q (in association with the coefficient value) determine which of the two divisors to use.

(c) Determine the total number of bits needed to code the quantised macroblock according the variable length coding and packet structure described below.

(d) If the number of bits exceeds the available capacity (512 bits) increment q.

(e) Repeat (b), (c) and (d) until the coded macroblock fits in the available space.

This will efficiently give minimum quantising to fit the space. Other approaches may include a measure of picture quality and one might consider starting with heavy quantising and modifying to achieve a picture quality above a minimum threshold.

### Variable Length Coding

The quantised coefficients (except the three DC terms) are coded according to the following signed Exp-Golomb code (BS ISO/IEC 14496-10:2003 Information technology - Coding of audio-visual objects - Part 10: Advanced video coding, section 9.1, J. Teuhola, "A compression method for clustered bit-vectors", Information Processing Letters, vol. 7, pp. 308-311, Oct. 1978.):

| 0 | 1 | 7 | 0001110 |
|---|---|---|---|
| 1 | 010 | -7 | 0001111 |
| -1 | 011 | 8 | 000010000 |
| 2 | 00100 | -8 | 000010001 |
| -2 | 00101 | 9 | 000010010 |
| 3 | 00110 | -9 | 000010011 |
| -3 | 00111 | 10 | 000010100 |
| 4 | 0001000 | -10 | 000010101 |
| -4 | 0001001 | 11 | 000010110 |
| 5 | 0001010 | -11 | 000010111 |
| -5 | 0001011 | 12 | 000011000 |
| 6 | 0001100 | -12 | 000011001 |
| -6 | 0001101 | etc. | etc. |

### Packet structure

Each macroblock is encoded into a data packet of 512 bits, corresponding to a 2.5:1 compression compared to the original 10-bits-per-pixel input. The value of q selected for a macroblock is the smallest that results in the size of the compressed data not exceeding 512 bits.

The structure of each packet is as follows:

1. Quantisation code q, 5 bits, MSB first.
2. DC luminance coefficient divided by 16 and rounded, 10 bits, MSB first.
3. DC Cb chrominance coefficient divided by 8 and rounded, 10 bits, MSB first.
4. DC Cr chrominance coefficient divided by 8 and rounded, 10 bits, MSB first.
5. Remaining luminance coefficients, signed Exp-Golomb coded, in the order shown below:

| Y | 4 | 8 | 12 |
|---|---|---|---|
| 16 | 20 | 24 | 28 |
| 32 | 36 | 40 | 44 |
| 48 | 52 | 56 | 60 |

| 1 | 5 | 9 | 13 |
|---|---|---|---|
| 17 | 21 | 25 | 29 |
| 33 | 37 | 41 | 45 |
| 49 | 53 | 57 | 61 |

| 2 | 6 | 10 | 14 |
|---|---|---|---|
| 18 | 22 | 26 | 30 |
| 34 | 38 | 42 | 46 |
| 50 | 54 | 58 | 62 |

| 3 | 7 | 11 | 15 |
|---|---|---|---|
| 19 | 23 | 27 | 31 |
| 35 | 39 | 43 | 47 |
| 51 | 55 | 59 | 63 |

6. Remaining chrominance coefficients, signed Exp-Golomb coded, in the order shown below:

| Cb | 3 | 7 | 11 |
|---|---|---|---|
| 15 | 19 | 23 | 27 |
| 31 | 35 | 39 | 43 |
| 47 | 51 | 55 | 59 |

| 1 | 5 | 9 | 13 |
|---|---|---|---|
| 17 | 21 | 25 | 29 |
| 33 | 37 | 41 | 45 |
| 49 | 53 | 57 | 61 |

| Cr | 4 | 8 | 12 |
|---|---|---|---|
| 16 | 20 | 24 | 28 |
| 32 | 36 | 40 | 44 |
| 48 | 52 | 56 | 60 |

| 2 | 6 | 10 | 14 |
|---|---|---|---|
| 18 | 22 | 26 | 30 |
| 34 | 38 | 42 | 46 |
| 50 | 54 | 58 | 62 |

Trailing zero coefficients in the packet are not counted when determining whether the data fits in the available space. Such coefficients need not be stored if the packet is already full (they would otherwise have needed one extra bit of capacity per coefficient). It is only for this reason that the order of the coefficients is significant. In particular where there is no chrominance (all chrominance coefficients are zero) the entire data packet is available for coded luminance.

It may be beneficial to fill any unused data bits with random values, to minimise the visibility of the data on the compatible signal.

When used to compress a 1080p50 input to a 1080i-compatible output, the data packet is transported in the least-significant 8 bits of the (10-bit) video, requiring 64 consecutive video samples (32 luminance and 32 chrominance). Therefore 60 packets can be contained within a single TV-line of 'interlaced' output. The first bit of the data packet is the most-significant bit of the first 8-bit value.

**Compatible picture**

The following disclosure relates primarily to the invention disclosed in our concurrently filed co-pending application which bears our reference IK/P27497GB and is not fundamental to the present invention but nonetheless useful for putting a complete system in context.

The two most-significant bits of the 10-bit output can be used to carry a 'compatible' interlaced version of the input picture, so that if the compressed signal is viewed as if it were standard 1080i video the content will be recognisable, although noisy. This makes it possible to monitor the signal for the purposes of identification and to give confidence that the coder is working.

The steps to achieve this are as follows:

1. An interlaced version of the input is created, typically by averaging pairs of consecutive progressive lines. The phase of the line pairing must be different on even fields and odd fields in order to achieve the required interlaced structure.

2. Each 10-bit pixel value is modified by *subtracting* the 8-bit value of the coded data packet corresponding to that pixel's position and *adding* a two-dimensional halftone dither. After the addition and subtraction the result must be limited to a valid range. The dither consists of a repeating 8x8 pattern of values as follows:

| 0 | 128 | 32 | 160 | 8 | 136 | 40 | 168 |
|---|---|---|---|---|---|---|---|
| 192 | 64 | 224 | 96 | 200 | 72 | 232 | 104 |
| 48 | 176 | 16 | 144 | 56 | 184 | 24 | 152 |

(continued)

| 240 | 112 | 208 | 80 | 248 | 120 | 216 | 88 |
| 12 | 140 | 44 | 172 | 4 | 132 | 36 | 164 |
| 204 | 76 | 236 | 108 | 196 | 68 | 228 | 100 |
| 60 | 188 | 28 | 156 | 52 | 180 | 20 | 148 |
| 252 | 124 | 220 | 92 | 244 | 116 | 212 | 84 |

The dither is added independently to the luminance, Cb chrominance and Cr chrominance components, where the row selected is determined by the line number evaluated modulo-8, and the column selected is determined by the pixel number (0-1919 for luminance, 0-959 for chrominance) evaluated modulo-8.

3. The least-significant 8-bits of the resulting pixel value are discarded and replaced by the 8-bit value from the coded data packet.

4. If the final 10-bit value is a forbidden TRS code (Ref 3), the most-significant two bits are modified:

00 000000 xx is modified to 01 000000 xx

11 111111 yy is modified to 10 111111 yy

## Decompression process

The decompression process essentially involves reversing the steps in the compression process, apart from those concerned with generating the compatible interlaced signal and the need to determine the degree of quantisation.

## Data extraction

For each macroblock the coefficients are extracted from the corresponding data packet as follows:

1. The 64 bytes comprising the data packet are interpreted as a stream of 512 bits, where the most-significant bit of the first byte is the first bit of the stream.

2. The first five bits are extracted as the value of q (0-31).

3. The next 10 bits are extracted and multiplied by 16 to form the luminance DC coefficient.

4. The next 10 bits are extracted and multiplied by 8 to form the Cb chrominance DC coefficient.

5. The next 10 bits are extracted and multiplied by 8 to form the Cr chrominance DC coefficient.

6. The remaining 63 luminance coefficients are extracted as variable-length signed Exp-Golomb codes (see above), according to the packet structure. If the data is exhausted, any remaining coefficients are set to zero.

7. The remaining 62 chrominance coefficients are extracted as variable-length signed Exp-Golomb codes (see above), according to the packet structure. If the data is exhausted, any remaining coefficients are set to zero.

## Inverse quantisation

Each non-zero coefficient (apart from the three DC coefficients) is multiplied by a power of two according to the value of the quantisation parameter q as follows:

1. The most-significant 3 bits of q, being a value in the range 0 to 7, determine two possible powers of two by which each coefficient must be multiplied:

| 0 | multiply by 1 or 2 |
| 1 | multiply by 2 or 4 |
| 2 | multiply by 4 or 8 |
| 3 | multiply by 8 or 16 |

(continued)

| | |
|---|---|
| 4 | multiply by 16 or 32 |
| 5 | multiply by 32 or 64 |
| 6 | multiply by 64 or 128 |
| 7 | multiply by 128 or 256 |

2. The least-significant 2 bits of q, in conjunction with the value of the coefficient itself, determine which of the two possible multipliers is used. A three bit number in the range 4 to 7 is derived from the coefficient value as follows:

(a) Take the absolute value of the coefficient. (b) If the value is greater than 7 keep dividing by two until 7 or less. (c) If the value is less than 4 keep multiplying by two until 4 or more.

The following table determines whether the smaller or larger multiplier is used, where the rows correspond to the least-significant 2 bits of q and the columns to the number derived from the coefficient:

| | 4 | 5 | 6 | 7 |
|---|---|---|---|---|
| 0 | smaller | smaller | smaller | smaller |
| 1 | larger | smaller | smaller | smaller |
| 2 | larger | larger | smaller | smaller |
| 3 | larger | larger | larger | smaller |

So if the least-significant 2 bits of q are zero the smaller of the two multipliers is always used, but otherwise which multiplier is used depends on the value of the coefficient.

**Inverse Hadamard transforms**

The 'DC' ($s_{00}$) terms of the original 4x4 Integer transforms, that is four values per macroblock from the luminance and two values each per macroblock from Cb and Cr, are reconstituted by applying inverse 1-dimensional Hadamard transforms as follows:

Luminance:

$$s_a = (h_a + h_b + h_c + h_d) >> 2$$

$$s_b = (h_a + h_b - h_c - h_d) >> 2$$

$$s_c = (h_a - h_b + h_c - h_d) >> 2$$

$$s_d = (h_a - h_b - h_c + h_d) >> 2$$

Chrominance:

$$s_a = (h_a + h_b) >> 1$$

$$s_b = (h_a - h_b) >> 1$$

**Inverse scaling**

The 4x4 transform blocks are scaled as follows (**Ref. 4**):

$$\begin{bmatrix} r_{00} & r_{01} & r_{02} & r_{03} \\ r_{10} & r_{11} & r_{12} & r_{13} \\ r_{20} & r_{21} & r_{22} & r_{23} \\ r_{30} & r_{31} & r_{32} & r_{33} \end{bmatrix} = \begin{bmatrix} s_{00} & s_{01} & s_{02} & s_{03} \\ s_{10} & s_{11} & s_{12} & s_{13} \\ s_{20} & s_{21} & s_{22} & s_{23} \\ s_{30} & s_{31} & s_{32} & s_{33} \end{bmatrix} \otimes \begin{bmatrix} 16 & 20 & 16 & 20 \\ 20 & 25 & 20 & 25 \\ 16 & 20 & 16 & 20 \\ 20 & 25 & 20 & 25 \end{bmatrix}$$

The output values are in the range -47150 to +47150.

**Inverse Integer transforms**

Each 4x4 block is transformed back from frequency space using the following transform **X = HRH$^T$**:

$$\begin{bmatrix} x_{00} & x_{01} & x_{02} & x_{03} \\ x_{10} & x_{11} & x_{12} & x_{13} \\ x_{20} & x_{21} & x_{22} & x_{23} \\ x_{30} & x_{31} & x_{32} & x_{33} \end{bmatrix} = \begin{bmatrix} 1 & 1 & 1 & \frac{1}{2} \\ 1 & \frac{1}{2} & -1 & -1 \\ 1 & -\frac{1}{2} & -1 & 1 \\ 1 & -1 & 1 & -\frac{1}{2} \end{bmatrix} \begin{bmatrix} r_{00} & r_{01} & r_{02} & r_{03} \\ r_{10} & r_{11} & r_{12} & r_{13} \\ r_{20} & r_{21} & r_{22} & r_{23} \\ r_{30} & r_{31} & r_{32} & r_{33} \end{bmatrix} \begin{bmatrix} 1 & 1 & 1 & 1 \\ 1 & \frac{1}{2} & -\frac{1}{2} & -1 \\ 1 & -1 & -1 & 1 \\ \frac{1}{2} & -1 & 1 & -\frac{1}{2} \end{bmatrix}$$

The output values from the transform are in the range -32833 to +32788.

An alternative implementation of this transform, as a sequence of 1-dimensional operations, is given in Reference 5.

**Final scaling**

The final video values are obtained by scaling and rounding as follows:

$$z_{ij} = \text{Sign}(x_{ij}) * ((\text{Abs}(x_{ij}) + 32) >> 6)$$

followed by limiting to the range -512 to +511.

For conversion to conventional values used in Serial Digital Video (unsigned luminance and offset-binary chrominance) 512 is added to these values. Equivalently the most-significant bit of the 10-bit number is inverted.

**Test results**

The compression method has been tested using both still pictures and progressively-scanned moving sequences. The moving sequences are more critical because quantising noise and aliasing can often be masked by detail in a still picture. The results have been assessed both subjectively and by means of PSNR measurements. The subjective tests demonstrated that, for the material used, the artefacts were generally invisible even when a difference picture was used to draw attention to them. The PSNR measurements are presented below. The names below refer to test images, the content of which is not critical but it can be seen that reasonable results were obtained over a range of material.

**Still pictures**

| Picture | PSNR (luminance) | PSNR(chrominance) |
|---|---|---|
| Newpat PM | 55.5 dB | 57.6 dB |
| Kiel Harbour (1080) | 51.4 dB | 51.6 dB |
| Test Card W | 56.9 dB | 60.0 dB |
| Boy with toys | 52.2 dB | 51.9 dB |
| Dick | 51.2 dB | 50.8 dB |
| Boat | 52.7 dB | 52.3 dB |
| Tree | 48.4 dB | 47.6 dB |
| Tree (10<sup>th</sup> generation) | 48.0 dB | 47.5 dB |

**Progressive sequences**

| Sequence | PSNR (luminance) | PSNR (chrominance) |
|---|---|---|
| Toys & Calendar (720) | 50.5 - 51.1 dB | 49.4 - 49.8 dB |
| Yosemite (720) | 50.1 - 51.1 dB | 49.4 - 50.0 dB |
| White City (720) | 50.4 - 50.5 dB | 49.4 - 49.5 dB |
| BBCdisk | 49.0 - 50.0 dB | 48.7 - 49.5 dB |
| Football | 48.2 - 49.0 dB | 47.8 - 48.5 dB |
| Skate | 52.1 - 53.3 dB | 51.7 - 53.0 dB |

The compression method described shows promise in being able to achieve a 2:1 reduction in bit rate with artefacts below the threshold of visibility for typical material.

**References**

1. BS ISO/IEC 14496-10:2003 Information technology - Coding of audio-visual objects - Part 10: Advanced video coding, section 8.6.1.1

2. BS ISO/IEC 14496-10:2003 Information technology - Coding of audio-visual objects - Part 10: Advanced video coding, section 9.1

3. ITU-R BT.1120-4 (2003) Digital interfaces for HDTV studio signals, sections 2.1 and 2.3.

4. BS ISO/IEC 14496-10:2003 Information technology - Coding of audio-visual objects - Part 10: Advanced video coding, section 8.5.5

5. BS ISO/IEC 14496-10:2003 Information technology - Coding of audio-visual objects - Part 10: Advanced video coding, section 8.5.8

## Summary

A method has been proposed whereby, instead of dividing all the values by (say) 3 a proportion of the values would be divided by 2 and the rest by 4.

If the Variable Length Code has the characteristic that dividing by 4 always results in fewer coded bits than dividing by 2 (for example the Exp-Golomb code has this property) there is no 'ineffective' quantising. By extension to achieve an equivalent degree of quantising N one would divide some data values by the next power-of-2 ($Q$) smaller than N and the rest by the next power-of-two ($2Q$) larger than N.

If it is desired to divide a proportion of the data values by $Q$ and the rest by $2Q$ according to a parameter taking the value 0, 1, 2, 3 or 4 (corresponding to an increasing degree of quantising), a novel scheme is proposed as follows:

Parameter = 0: Divide all values by $Q$.

Parameter = 1: Divide approximately three-quarters of the values by $Q$ and the rest by $2Q$.
Parameter = 2: Divide approximately half the values by $Q$ and the rest by $2Q$.
Parameter = 3: Divide approximately one-quarter of the values by $Q$ and the rest by $2Q$.
Parameter = 4: Divide all values by $2Q$.

To implement this scheme the coder must determine which values are divided by the smaller number and which by the larger number, in such a way that the decoder can make the same determination without the need to signal additional information (whichever divisor is used in the coder the equivalent multiplier must be used in the decoder).

In one embodiment of the invention the coder can determine which divisor is used for which data value based on its position in the image. For example if half the values should be divided by $Q$ and the other half by $2Q$, the determination could be based on whether the value corresponded to an odd or even-numbered pixel.

In the preferred embodiment of the invention, the determination of which divisor is used is based on the actual data value. Assuming the data values are uniformly distributed, one method is to derive a 'significance' figure. This can conveniently be done by considering e.g. the two or three (preferably three) most significant non-zero bits (which will encode a value between 0 and 7). The data can be shifted as appropriate to evaluate these, which can be considered equivalently as follows (assuming positive non-zero integer data values and integer arithmetic):

If the data value is greater than 7, keep dividing it by 2 until it is 7 or less.
If the data value is less than 4, keep multiplying it by 2 until it is 4 or more.

This gives a result of 4, 5, 6 or 7 for each (non-zero) data value. The desired approximate proportions can then be achieved as follows:

Parameter = 0: Divide all values by 2 (fine quantiser).
Parameter = 1: Divide those values with result 5, 6 and 7 by 2, those with result 4 by 4.
Parameter = 2: Divide those values with result 6 and 7 by 2, those with result 4 and 5 by 4.
Parameter = 3: Divide those values with result 7 by 2, those with result 4, 5 and 6 by 4.
Parameter = 4: Divide all values by 4 (coarse quantiser).

It can be seen that parameter=4 is equivalent to parameter=0, but dividing all values by the next higher quantiser assuming the next fine quantiser is equal to the coarse quantiser (here 4). It can be seen that if the quantisation parameter also encodes the quantiser pairs in immediately higher bits, succesive increments of the quantisation parameter will neatly firstly increase the proportion quantised with the higher of two quantisers and then increment the quantisers and reset the proportion.

Thus the above defines a mapping which varies as a function of quantiser parameter and gives what empirically turns out to be a very useful division into proportions to be coarsely qunatised (divided by 4) or finely quantised (divided by 2). This can also be considered equivalent to setting an adjustable threshold (of 0/4, 5, 6, 7)

Because the decoder needs to make the same determination of divisor as the coder, special measures need to be taken when the significance figure derived from the quantised value (used in the decoder) would be different from the significance figure derived from the value before quantising (used in the coder). This can occur as the result of rounding or when the value is small. One such measure is to quantise affected values by truncation rather than rounding.

In other embodiments there could be a finer degree of adjustment (more steps) or different ways of determining which divisor to use.

**Exemplary code**

The quantisation function according to an embodiment of the present invention can be expressed in C-code as follows:

```
// Return a significance value between 4 and 7 (if a is non-
zero)
int top3(int a)
{
  if (a == 0)
    return 0;
  a = abs(a);
  while (a > 7)
    a /= 2;
  while (a < 4)
    a *= 2;
  return a;
```

```
}

// Signed shift right with rounding
int round(int a, int q)
{
  return sgn(a) * ((abs(a) + (1 << (q-1))) >> q);
}

// Signed shift right with truncation
int trunc(int a, int q)
{
  return sgn(a) * (abs(a) >> q);
}

// Quantise according to parameter q
int quant(int a, int q)
{
  int m, n, o;
  if (q == 0)
    return a;
  m = round(a, q/4);
  n = round(a, q/4+1);
  o = trunc(a, q/4+1);
  if (top3(n) < (q%4+4))
    return n;
  if (top3(m) >= (q%4+4))
    return m;
  if (top3(o) < (q%4+4))
    return o;
  fprintf(stderr, "Quantisation failed\n");
  exit(7);
}
```

## Claims

1. A method of compression encoding a set of data values comprising:

   quantising the data values by applying a respective quantiser value to each data value to produce quantised data values;
   coding the quantised data values according to a coding scheme to produce coded data values, wherein the number of bits allocated to each coded data value is variable;

   **characterised by**:-

   defining a relatively coarse quantiser and a relatively fine quantiser;
   defining blocks of data;
   setting a quantisation parameter for each block of data;
   selecting, based on at least one selection criterion dependent on the quantisation parameter for each block, a first portion of the block of data to be quantised using the relatively fine quantiser and a second portion of the block of data to be quantised using the relatively coarse quantiser.

2. A method according to Claim 1 wherein the relatively coarse quantiser and relatively fine quantiser is selected for each block from among predefined pairs of available coarse and fine quantiser values based on the quantisation parameter.

3. A method according to Claim 2 wherein the quantisation parameter comprises a first component for selecting a pair of said relatively coarse and fine quantiser values and a second component for selecting portions of the data to be coded.

4. A method according to Claim 3 wherein the quantisation parameter encodes pairs of relatively coarse and fine quantiser values such that the relatively coarse quantiser value for a first value of the first component of the quantisation parameter corresponds to the relatively fine quantiser value for the next available higher value of the first component.

5. A method according to Claim 3 or 4 wherein selection is based on the second component of the quantisation parameter such that an increment of the second component results in a higher proportion of the data being quantised using the relatively coarse quantiser.

6. A method according to any of Claims 3 to 5 wherein the first component is encoded in more significant bits of the quantisation parameter and the second component is encoded in less significant bits of the quantisation parameter.

7. A method according to Claim 6 wherein said encoding of the first and second components is such that every increment of the quantisation parameter increases the degree of quantisation.

8. A method according to Claim 6 or 7 wherein two least significant bits encode progressively increasing proportions to quantise using the relatively coarse quantiser and at least two adjacent more significant bits encode increasing values of relatively coarse and fine quantiser values.

9. A method according to any of Claims 5 to 8 wherein for a quantiser parameter / second component corresponding to minimum quantisation, all data values are quantised using the relatively fine quantiser.

10. A method according to any preceding claim wherein said selecting is additionally based on the value of each data value.

11. A method according to Claim 10 wherein data values above a threshold are quantised using said relatively fine quantiser and data values below the threshold are quantised using said relatively coarse quantiser.

12. A method according to Claim 11 wherein said threshold is varied as a function of the quantisation parameter for each block.

13. A method according to Claim 10 wherein available data values are mapped to coarse or fine quantisation categories based on a mapping which varies as a function of quantisation parameter.

14. A method according to any preceding claim wherein said relatively course and said relatively fine quantisers comprise a single quantiser adapted to provide more than one degree of quantisation.

15. A method according to any preceding claim wherein the ratios of the relatively coarse and relatively fine quantisers are selected based on the coding scheme so that quantising and coding a given non-zero data value using the relatively coarse quantiser produces a coded data value having fewer bits than quantising and coding the given data value using the relatively fine quantiser.

16. A method according to any preceding claim wherein said selecting is additionally based on spatial information.

17. A method according to any preceding claim wherein for each data block selection is based on exactly two possible quantisers, preferably differing by a factor of two.

18. A method according to any of Claims 1 to 16 wherein a further [intermediate or relatively more coarse or relatively more fine] quantiser is defined and wherein selecting includes optionally selecting the further quantiser for a further portion of the data.

19. A method comprising:

setting an initial quantisation parameter value for a group of data comprising at least one block;
coding at least a block of data according to any preceding claim;
determining whether the coded data satisfies at least one test;
conditionally on the outcome of the test, adjusting the quantisation parameter and repeating said coding and determining.

20. A method according to Claim 19 wherein the initial quantisation parameter value is a minimum, the test comprises determining a bit requirement, and adjusting comprises incrementing.

21. A method according to Claim 19 wherein the initial quantisation parameter value is a maximum, the test comprises determining a quality measure, and adjusting comprises decrementing.

22. A method according to any preceding claim wherein applying a quantiser value comprises dividing a data value by the quantiser value to produce a dividend.

23. A computer program or computer program product or programmed logic component arranged to perform a method according to any preceding claim.

24. An encoder for compression encoding a set of data values comprising:

means for quantising the data values by applying a respective quantiser value to each data value to produce quantised data values;
means for coding the quantised data values according to a coding scheme to produce coded data values, wherein the number of bits allocated to each coded data value is variable;

**characterised by**:-

means for defining a relatively coarse quantiser and a relatively fine quantiser;
means for defining blocks of data;
means for setting a quantisation parameter for each block of data;
means for selecting, based on at least one selection criterion dependent on the quantisation parameter for each block, a first portion of the block of data to be quantised using the relatively fine quantiser and a second portion of the block of data to be quantised using the relatively coarse quantiser.

25. Apparatus according to Claim 24 further comprising means or hardware arranged to perform a method of any of Claims 2 to 22.

26. A method of compression decoding a set of compressed data values comprising:

decoding the compressed data to produce quantised data values; and
inverse quantising the quantised data values by applying a respective quantiser value to each data value to produce decompressed data values;

**characterised by**:-

defining a relatively coarse quantiser and a relatively fine quantiser;
defining blocks of quantized data;
extracting a quantisation parameter from each block of data;
selecting, based on at least one selection criterion dependent on the quantisation parameter for each block, a first portion of the block of data to be inverse quantised using the relatively fine quantiser and a second portion of the block of data to be inverse quantised using the relatively coarse quantiser

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. TEUHOLA.** A compression method for clustered bit-vectors. *Information Processing Letters,* October 1978, vol. 7, 308-311
- Information technology - Coding of audio-visual objects - Part 10: Advanced video coding, section 8.6.1.1. *BS ISO/IEC 14496-10,* 2003
- Information technology - Coding of audio-visual objects - Part 10: Advanced video coding, section 9.1. *BS ISO/IEC 14496-10,* 2003
- Digital interfaces for HDTV studio signals, sections 2.1 and 2.3. *ITU-R BT.1120-4,* 2003
- Information technology - Coding of audio-visual objects - Part 10: Advanced video coding, section 8.5.5. *BS ISO/IEC 14496-10,* 2003
- Information technology - Coding of audio-visual objects - Part 10: Advanced video coding, section 8.5.8. *BS ISO/IEC 14496-10,* 2003